# EUROPEAN PATENT APPLICATION

(11) **EP 2 982 952 A1**
(43) Date of publication of application: **10.02.2016**
(21) Application number: 14183003.4
(22) Date of filing: 01.09.2014
(51) Int. Cl.: G01L 3/14, B62M 6/50, B62J 99/00

(54) **A torque sensor for a central drive of an electric bicycle**

(30) Priority: 05.08.2014 SI 201400281
(71) Applicant: Race Kogo d.o.o., 2380 Slovenj Gradec (SI)
(72) Inventor: POLUTNIK, Aleksander, 3261 LESI NO (SI)
(74) Representative: Pipan, Marjan

(57) **Abstract**

The object of the invention is a torque sensor for a central drive of an electric bicycle. The torque sensor for a central drive of an electric bicycle of the present invention is a material strain sensor and is embodied by strain gauges (4) or an inductive principle with metallic plugs (23) and coils (24) for measuring stretch which are fastened in the central part of a sprocket (2).

## Description

The object of the invention is a torque sensor for a central drive of an electric bicycle. A drive of an electric bicycle consists of an electric motor, a gear shift mechanism and a crank arm. The invention belongs to class B62M6/55 of the International Patent Classification.

Electric bicycles (also known as pedelecs) are classified in EU legislation as cycles with an auxiliary electric motor having a maximum power of 250 W and reaching a maximum speed of 25 km/h. A throttle control as used on motorcycles is not allowed. A characteristic trait of electric bicycles is that the electric motor only provides assistance to a user and contributes part of the power needed to ride a bicycle.

Electric bicycles are classed according to the arrangement of an electric motor/drive as follows: bicycles with an electric drive integrated in the front hub; bicycles with an electric drive integrated in the rear hub; bicycles with an electric drive integrated at a crank - central drives.

Central-drive bicycles have some advantages over other types of bicycles, which contributes to a constant increase in their market share. These advantages are: the electric motor is not integrated in a wheel which reduces rotating masses; the electric motor is arranged in proximity to the centre of gravity of the whole bicycle.

The power from the drive is transmitted to the rear wheel through a chain and a derailleur which results in the fact that the electric motor always functions within an optimal range of revolutions. Such bicycles prove excellent while riding uphill.

Depending on the mode of motor control, electric bicycles are classified as follows: bicycles without a torque sensor and bicycles with a torque sensor. Bicycles without a torque sensor are only provided with a cadence sensor (measuring pedalling speed) and a rear wheel speed sensor (measuring riding speed). When a cadence sensor detects pedalling by a user, the electric motor starts and provides assistance to the user. Assistance power depends only on the mode selection on an LCD and not on the power/torque, with which the user actually pedals. In torque sensor bicycles the torque, with which the user pedals, is measured and the electric motor only provides directly proportional assistance. A factor of assistance is normally settable on an LCD and is normally in the range from 50-200 %.

Electric bicycles provided with a torque sensor offer a considerably better user experience. If a regulation algorith is properly set, adding power by the electric motor is continuous and the user has a feeling of having »super« legs. Unlike these systems the systems without a torque sensor only turn on/off electric assistance when pedalling is detected. The user feels this burst. As electric assistance is constant, not depending on the user, there is poor user experience.

A prior art example of a typical central drive with a torque sensor is disclosed in patent document WO2014009995. Figure 10 of this document shows a variant with a magnetostrictive torque sensor. It requires a shaft that connects both pedals (251), a torsion cylinder (255) made from a magnetically active material, and a coil (260) for generating and measuring a magnetic field.

The technical problem that is efficiently solved by the present construction of a torque sensor for a central drive of an electric bicycle of the invention is an embodiment of a torque sensor with a strain gauge or an inductive measuring principle arranged in the central part of a central drive sprocket placed directly on a crank arm without a torsion cylinder.

The invention will be described in more detail by way of an embodiment and figures, in which:
Figure 1 shows a cross-section of a central drive of an electric bicycle of the invention
Figure 2 shows a side view of a chain wheel with strain gauges;
Figure 3 shows a torque diagram as a function of crank revolution;
Figure 4 shows a charge amplifier circuit;
Figure 5 shows a charge amplifier circuit in a variant with a microprocessor;
Figure 6 shows a side view of a chain wheel with an inductive measuring principle.

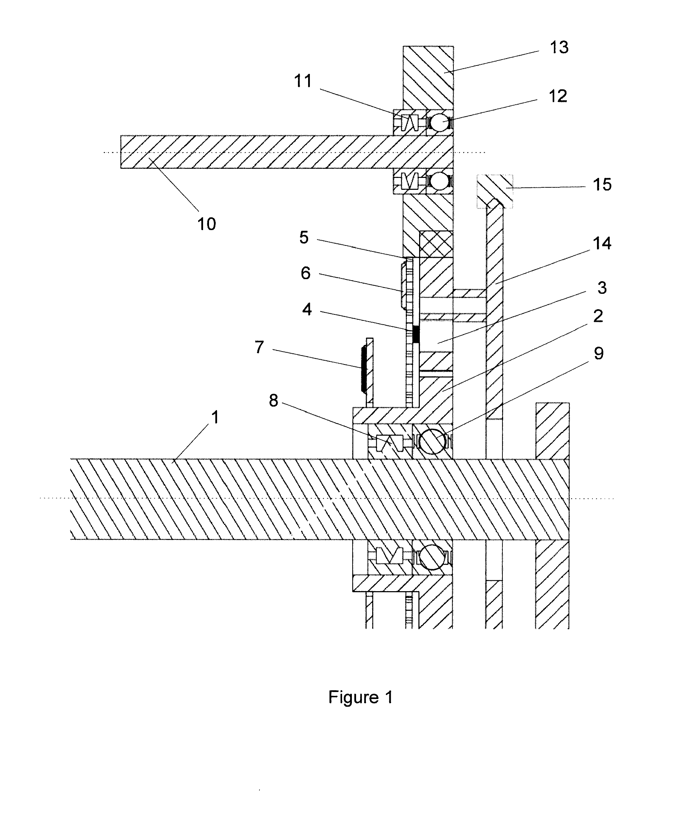

Figure 1 shows a cross-section of a central drive of an electric bicycle with an integrated torque sensor of the invention.

The torque sensor for a central drive of an electric bicycle of the invention is embodied as a material strain sensor which is measured with strain gauges 4 attached in the central part of a sprocket 2, or in a second embodiment inductively by a distance change between a metallic plug 23 and a coil 24 with strain gauges 4 attached in the central part of the sprocket 2.

On a crank arm 1 a rear sprocket 2 in the gear shift electric motor/chain is arranged via a bearing 9 and a unidirectional clutch 8. Pedals, with which the user propels the bicycle and which are connected with a crank arm 1 create a torque which is transmitted from the crank 1 via the unidirectional clutch 8 to the sprocket 2. Externally, the sprocket 2 is driven by an electric motor or by a sprocket wheel transmission with a sprocket 13 via a bearing 12 and a unidirectional clutch 11 to the electric motor shaft 10. At the external part of the sprocket 2 a chain wheel 14 is arranged thereon and transmits the torque via a chain 15 to the driven wheel. On the internal part, this sprocket 13 is connected with the crank arm 1, on which pedals are installed. The sprocket 2 is torsionally loaded in the central part with the torque caused by the user. The torque of the electric motor is transmitted to the sprocket 14 only on the external part. In the central part 3, strain gauge sensors - strain gauges 4 are attached to the sprocket 2. The sprocket 2 is further provided with a printed circuit board 5 equipped with electronic elements 6, which printed circuit board rotates together with the sprocket 2 and is connected with a fixed printed circuit board 7 by a capacitive or inductive assembly. In this part, the material strain depends solely on the user's torque.

One of embodiments of the sprocket has profile grooves 25 in axial direction. Such embodiment allows for higher material strain at identical torque and a smaller sprocket diameter. Higher material strains allow bigger signals and therefore a better signal to noise ratio.

A strain sensor - strain gauge 4 can be provided as a resistance strain gauge or a piezo effect strain gauge.

Resistance strain gauges are a classic solution. Their drawback is poorer sensitivity and higher consumption, however, they allow measurement of static material strains - stretches. Combined with a proper measuring electronic circuit they yield acceptable results.

Another, better option is use of piezoelectric strain gauges. The active material applied on them is piezo ceramics or PVDF plastics. When under a strain load, both materials generate a charge on their surface. Sensitivity of piezo strain gauges is by about 60 dB higher than that of resistance strain gauges. As they generate a charge themselves, they do not have own consumption. The most important drawback of piezo strain gauges is their incapability of measuring static quantities. The charge is discharged from them due to terminal internal resistance. This phenomenom is called drift and renders the measurement of static quantities impossible.

A signal generated by a strain gauge 4 is led to the charge amplifier circuit that converts it to voltage. Output voltage of the charge amplifier circuit is directly proportional to the charge (stretch of the strain gauge 24 or distance change between the metallic plug 23 and the coil 24) of the measured torque.

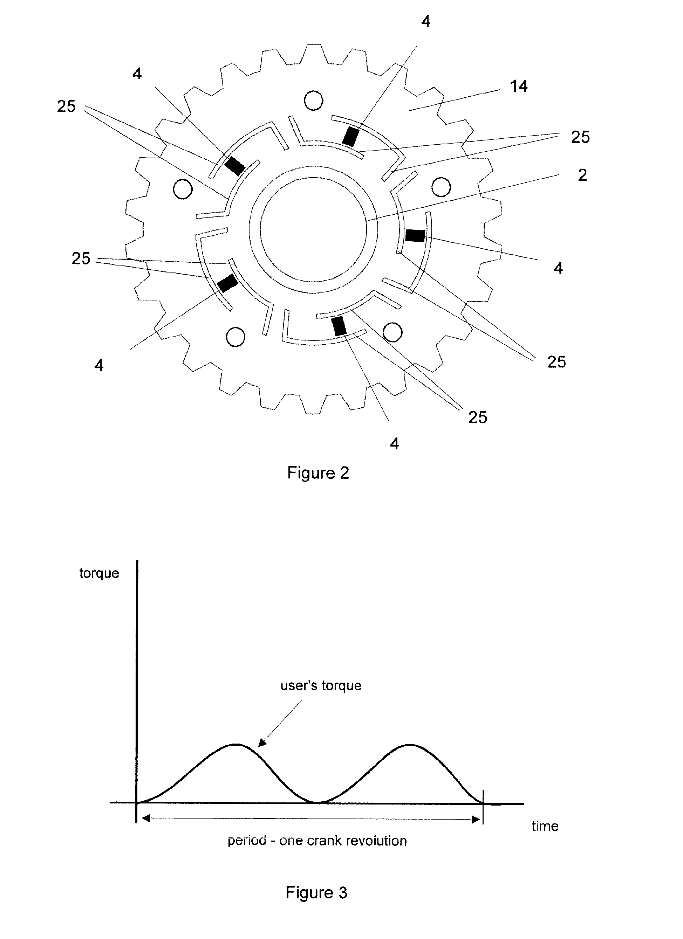

The torque caused by the user while pushing the pedals has a typical shape of a high sinusoid (Figure 3). At dead centre - when the pedals are vertical - the torque is very small or rather null. The torque is highest when the pedals are in horizontal position - the user pushes a pedal perpendicularly. This property is used in combination with piezo strain gauges 4.

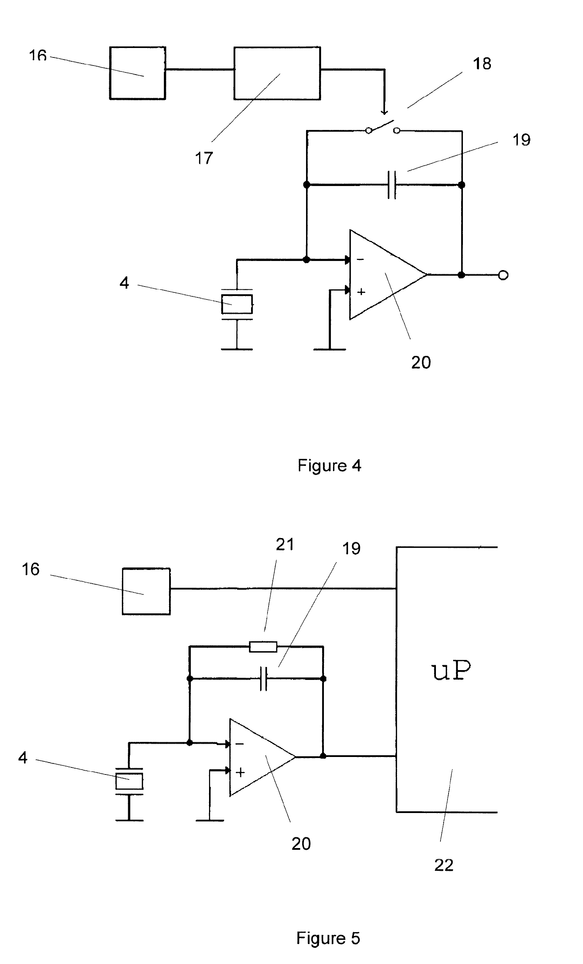

The charge amplifier circuit is shown in Figure 4. It is made up of a crank angle sensor 16, a vertical position detector 17, a reset switch 18, a capacitor 19 and an operating amplifier 20.

The charge amplifier circuit includes a synchronous reset circuit which resets the output of the charge amplifier to zero value. This circuit is triggered from the crank angle detector 1. Reset is triggered twice per a revolution of the crank by pedals - always when the pedals are vertically one above the other and the user's torque is zero or very low.

A similar algorithm can be carried out by a microprocessor 22. In this case, a high-ohmic resistor 21 is arranged in the charge amplifier circuit in parallel with a capacitor 19. The charge amplifier circuit of this type is also provided with a filter permeable to high frequencies and a time constant which is a product between the capacitor 19 and the resistor 21 connected in parallel. Desirably, this constant should be in a range of several seconds. A crank angle sensor 16 is also connected to the microprocessor 22. When a vertical position of the crank is detected, the software measures the current charge value and subtracts it from subsequent measurements.

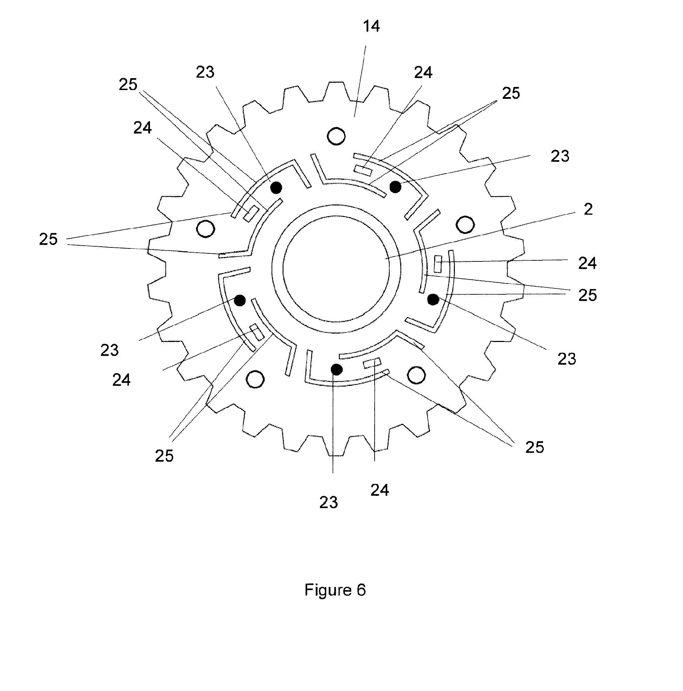

The material strain can also be measured by a change in distance between two points. This is the embodiment of the inductive material strain sensor which is shown on the chain wheel with metallic plugs 23 and coils 24 (Figure 6). At one side of the element which gets deformed due to the torque, a metallic plug 23 is arranged and a coil 24 is arranged at the other side. Deformation causes a change in the distance between the metallic plug 23 and the coil 24 which results in the changed inductivity of the coil 24. The latter can be measured by a standard inductivity to voltage converter. The processing of the signal is identical to that in the embodiment with strain gauges 4, only that the inductivity is now directly proportional to the torque reached by the user.

## Claims

1. A torque sensor for a central drive of an electric bicycle, wherein the torque is measured as a torsion strain in the sprocket 2 of sprocket gear shift
**characterized in that**
the torque sensor for measuring the stretch is attached in the central part (3) of the sprocket (2).

2. Torque sensor according to claim 1
**characterized in that**
the torque sensor is strain gauges (4).

3. Torque sensor according to claim 1
**characterized in that**
the torque sensor is based on an inductive principle embodied by a coil (24) and a metallic plug (23).

4. Torque sensor according to claims 2 or 3
**characterized in that**
axial grooves (25) are made in the sprocket (2) for generating higher material strains at identical torque.

5. Torque sensor according to claim 2
**characterized in that**
the strain gauges (4) are resistance strain gauges.

6. Torque sensor according to claim 2
**characterized in that**
the strain gauges (4) are piezo electric strain gauges.

7. Torque sensor according to claim 6
**characterized in that**
the piezo electric strain gauges (4) are connected to a charge amplifier circuit which resets every time when a pedal is vertical when the user's torque is null.

8. Torque sensor according to claim 6
**characterized in that**
software in the microprocessor is used to subtract the charge at a vertical angle of a pedal.
